# EUROPEAN PATENT APPLICATION

(11) **EP 3 145 181 A1**
(43) Date of publication of application: **22.03.2017**
(21) Application number: 14892099.4
(22) Date of filing: 24.10.2014
(51) Int. Cl.: H04N 7/16, H04N 7/173, H04N 21/41

(54) **SET-TOP BOX NETWORK SWITCHING METHOD, APPARATUS AND SET-TOP BOX HAVING SAME**

(30) Priority: 16.05.2014 CN 201410209694
(71) Applicant: ZTE Corporation, Shenzhen, Guangdong 518057 (CN)
(72) Inventor: CHEN, Qiong, Shenzhen Guangdong 518057 (CN)
(74) Representative: Savi, Massimiliano
(86) International application number: PCT/CN2014/089504
(87) International publication number: WO 2015/172528

(57) **Abstract**

A method and apparatus for set-top box network handover and a set-top box thereof, a corresponding computer program and a carrier thereof are disclosed. The method includes steps: acquiring a network handover parameter in a state that a set-top box is connected to a first network via a first access module which has been connected to the first network; executing a handover operation: accessing a second network through a second access module which has been connected to the second network when determining that the handover operation is required to be executed according to the network handover parameter. Accordingly, by the abovementioned technical solution, a user can perform handover between different network environments by using the set-top box, thereby enabling the user to enter a network environment besides a network to which a conventional set-top box can connect, reducing a network access limitation of the existing set-top box, and broadening a range of network access.

## Description

### Technical Field

The present invention relates to the field of a set-top box network handover technology, and more particularly, to a method and apparatus for set-top box network handover and a set-top box equipped with the apparatus.

### Background of the Invention

Interactive Personality TV (IPTV) is a new technology using broadband cable television networks and integrating various technologies such as the Internet, multimedia and communication to provide home users with a variety of interactive services including a digital TV. The IPTV service is generally achieved through a set-top box plus an ordinary TV, which may adapt well to today's rapid development trend of the network and fully and effectively use the network resources.

A traditional set-top box can only be connected to the Internet via a wired network access or a wireless (wifi) access method. Because the basic function of the set-top box is playing videos, it needs to access an IPTV service network, then the drawbacks of the traditional set-top box are obvious, so that the networking way only allows users to enjoy IPTV services provided by the operators, which greatly limits the Internet connecting function of the set-top box. When the user needs to access a network besides the IPTV service network, the set-top box in the related art cannot meet the user needs.

In addition, an intelligent IP set-top box which uses an Android system as a platform has become the development trend of the set-top box, many third-party applications based on the android platform all need networks besides the IPTV service network as a support, therefore, it needs to change the network access limitations of the set-top box in the related art and broaden the network access scope of the set-top box.

### Summary of the Invention

In view of the above, the technical problem to be solved by the present invention is to provide a method and apparatus for set-top box network handover, and a set-top box provided with the apparatus, so that the user not only can enjoy IPTV service network services but also can enjoy other network services.

In order to solve the abovementioned technical problem, the following technical solutions are adopted.

A method for set-top box network handover includes the following steps:
acquiring a network handover parameter in a state that a set-top box is connected to a first network through a first access module which has been connected to the first network;
executing a handover operation of accessing a second network through a second access module which has been connected to the second network when determining that the handover operation is required to be executed according to the network handover parameter.

Alternatively, the step of executing the handover includes:
removing all addresses of a current default gateway;
setting a gateway of the second network as a default gateway.

Alternatively, the method further includes:
before acquiring the network handover parameter, selecting an initial access network from the first network and the second network according to an initial network selection parameter, and accessing the initial access network via an access module corresponding to the initial access network.

Alternatively, the method further includes:
before the step of selecting the initial access network, controlling the first access module and the second access module to connect respectively to the first network and the second network.

Alternatively, the method further includes:
after the step of executing the handover operation, detecting whether to exit from the second network, and returning to the step of selecting the initial access network when detecting exiting from the second network.

Alternatively, the first network is an interactive personality television, IPTV, service network or a public network, and the second network is a network different from the first network in the interactive personality television, IPTV, service network and the public network.

An apparatus for set-top box network handover includes a network handover parameter acquisition module and a handover module, herein:
the network handover parameter acquisition module is arranged to: acquire a network handover parameter in a state that a set-top box is connected to a first network via a first access module which has been connected to the first network;
the handover module is arranged to: access a second network through a second access module which has been connected to the second network when determining that a handover operation is required to be executed according to the network handover parameter.

Alternatively, the handover module includes a removing unit and a setting unit, herein:
the removing unit is arranged to: remove all addresses of a current default gateway;
the setting unit is arranged to: set a gateway of the second network as a default gateway.

Alternatively, the apparatus further includes an initial access module, herein:
the initial access module is arranged to: before the network handover parameter acquisition module acquires the network handover parameter, select an initial access network from the first network and the second network according to an initial network selection parameter, and access the initial access network via an access module corresponding to the initial access network.

Alternatively, the apparatus further includes a controlling module, herein:
the controlling module is arranged to: before the initial access module selects the initial access network, control the first access module and the second access module to connect respectively to the first network and the second network.

Alternatively, the apparatus further includes an exiting detection module, herein:
the exiting detection module is arranged to: detect whether to exit from the second network after the handover module is connected to the second network via the second access module.

Alternatively, the first network is an interactive personality television, IPTV, service network or a public network; and the second network is a network different from the first network in the interactive personality television, IPTV, service network or the public network.

A set-top box includes a first access module used for accessing a first network and a second access module used for accessing a second network; and further includes the abovementioned apparatus for set-top box network handover in the claims.

A computer program includes program instructions, and when the program instructions are executed by an apparatus for set-top box network handover, the apparatus for set-top box network handover may execute the abovementioned method for set-top box network handover.

A carrier, for carrying the abovementioned computer program.

From the above descriptions, it can be seen that, through the method for set-top box network handover provided in the embodiments of the present invention, the user can use the set-top box to access a network besides the IPTV service network, thus reducing the network access limitations of the set-top box in the related art and broadening the range of network access. At the same time, through the method for set-top box network handover provided in the embodiment of the invention, the user can perform seamless handover between different networks by using the set-top box, and can freely browse network videos and perform operations such as on-line downloading and APP (application) upgrading.

### Brief Description of the Drawings

FIG. 1 is a flow chart of a method for set-top box network handover in accordance with an embodiment of the present invention;
FIG. 2 is a flow chart of controlling a first module to connect to an IPTV service network by means of a wired network in an embodiment of the present invention;
FIG. 3 is a flow chart of controlling a second module to connect to a public network by means of a wireless network in an embodiment of the present invention;
FIG. 4 is a schematic diagram of a structure of an apparatus for set-top box network handover in accordance with an embodiment of the present invention.

### Preferred Embodiments of the Invention

In order to provide an effective implementation scheme, the embodiment of the present invention provides the following embodiments, and the embodiments of the present invention will be described in the following in conjunction with the accompanying drawings of the specifications.

First, an embodiment of the present invention provides a method for a set-top box network handover, including the steps:
acquiring a network handover parameter in a state that a set-top box is connected to a first network through a first access module which has been connected to the first network;
executing a handover operation: accessing a second network through a second access module which has been connected to the second network when determining that the handover operation is required to be executed according to the network handover parameter.

Through the method for the set-top box network handover provided in the embodiment of the present invention, the user can use the set-top box to perform handover between different network environments, so that the user can enter a network environment besides the network to which a traditional set-top box can connect, thus reducing the network access limitation of the set-top box in the related art and broadening the range of the network access.

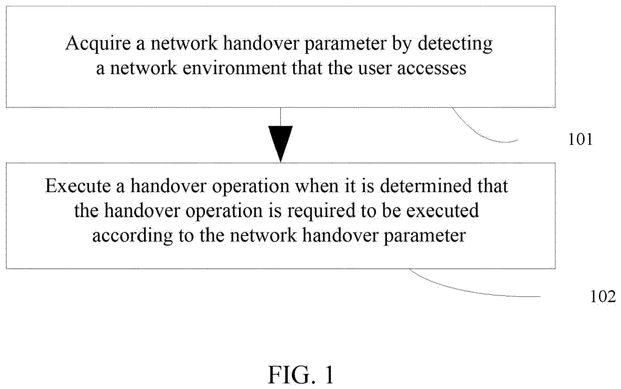

The abovementioned method provided in the embodiment of the present invention will be described with reference to the flow shown in FIG. 1. In the present embodiment, the first network refers to an IPTV service network, and the second network refers to a public network. In the state that the set-top box is connected to the IPTV through the first access module, the following steps are executed.

In step 101, it is to acquire a network handover parameter by detecting a network environment that the user accesses.

The abovementioned network handover parameter may be a parameter reflecting whether the network environment which the user enters is the same as the IPTV service network environment or a parameter representing the network environment accessed by the user.

In step 102, it is to execute a handover operation when it is determined that the handover operation is required to be executed according to the network handover parameter; the handover operation includes the steps: accessing the second network through the second access module that has been connected to the second network.

Alternatively, the method also includes: disconnecting a connection with the first access module, connecting to the second access module, and accessing the public network via the second access module. Thus, the user can access a public network besides the IPTV service network through the set-top box, and the access behavior of the user is no longer limited by the conventional set-top box.

In a plurality of embodiments, before executing the handover operation, it also executes: judging whether to execute a handover according to the network handover parameter. If it is judged that the handover is not executed, the state of accessing the first network via the first access module is kept. If it is judged that the handover is executed, it enters the step of executing the handover operation.

Alternatively, when the first network refers to the IPTV service network and the second network refers to the public network, the judging method may be: judging whether the user enters an IPTV service network environment or a public network environment; if the network handover parameter indicates that the user enters the IPTV service network environment, judging that a handover will not be executed; if the network handover parameter indicates that the user has entered the public network environment, judging that a handover should be executed.

In other embodiments, the first network may refer to a public network, then the second network refers to an IPTV service network.

In other embodiments, the first network may be an IPTV service network and the second network may be other service networks other than the IPTV service network. Conversely, the first network may also be other service networks other than the IPTV service network, and the second network may be an IPTV service network.

In other embodiments, before acquiring the network handover parameter, it is to select an initial access network from the first network and the second network according to an initial network selection parameter, and access the initial access network through an access module corresponding to the initial access network.

As an embodiment, the initial access network may refer to a network selected from the first network and the second network and accessed through the corresponding access module in the state that the set-top box does not access the first network via the first access module and the second network via the second access module.

As an embodiment, the initial network selection parameter is a basis for selecting the initial access network from the first network and the second network.

Alternatively, the initial network selection parameter may be a preset default parameter or a parameter acquired in accordance with the user's initial access behavior.

Take the first network as the IPTV service network and the second network as the public network for example, if the IPTV service network is selected as the initial access network from the public network and the IPTV service network in accordance with the initial network selection parameter, a gateway acquired when connecting to the IPTV service network is set as a default gateway, so as to ensure that the channel between the set-top box and the IPTV service network is smooth. If the public network is selected as the initial access network from the public network and the IPTV service network according to the initial network selection parameter, a gateway acquired when connecting to the public network is set as a default gateway to ensure that the channel between the set-top box and the public network is smooth.

In a plurality of embodiments, after the set-top box is turned on, it is to control the first access module to connect to the first network and the second access module to connect to the second network before selecting the initial access network.

The connection between the first access module and the first network and the connection between the second access module and the second network may be implemented by means of a wired network and a wireless network.

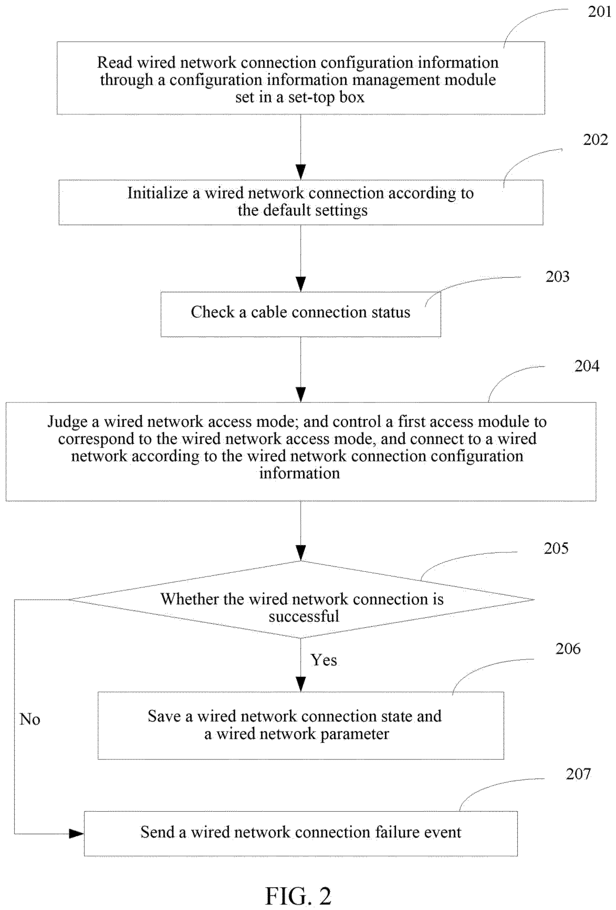

Take controlling the first access module to connect to the IPTV service network by means of the wired network as an example, the following steps will be executed with reference to FIG. 2.

In step 201, it is to read wired network connection configuration information through a configuration information management module set in the set-top box.

In step 202, it is to initialize a wired network connection according to the default settings.

Alternatively, the initialization may be realized by turning off corresponding processes. The corresponding processes include a Dynamic Host Configuration Protocol (DHCP) process and an Asymmetric Digital Subscriber Line (ADSL) dialing process.

In step 203, it is to check a cable connection status.

In step 204, it is to judge a wired network access mode; and control the first access module to correspond to the wired network access mode, and connect to the wired network according to the wired network connection configuration information.

If it is judged that the wired network is connected in a LAN (Local Area Network) mode, an IP address, a gateway, a subnet mask and a DNS (Domain Name System) server are set directly according to the wired network connection configuration information to control the first access module to connect to the wired network;
if it is judged that the wired network is connected in a DHCP mode, the DHCP process is started and the first access module is controlled to connect to the wired network according to the wired network connection configuration information;
if it is judged that the wired network is connected in a Point-to-Point Protocol Over Ethernet (PPPOE) mode, it is to start the PPPD process and the ADSL dialing process and control the first access module to connect to the wired network according to the wired network connection configuration information.

Alternatively, after the step 204, the following steps will be also executed.

In step 205, it is to judge whether the connection to the wired network is successful, if the connection to the wired network is successful, proceed to the next step; and if the connection to the wired network is unsuccessful, proceed to step 207.

In step 206, it is to save a wired network connection state and a wired network parameter, and notify other modules of the set-top box that the wired network connection is successful.

In step 207, it is to send a wired network connection failure event with a failure error code.

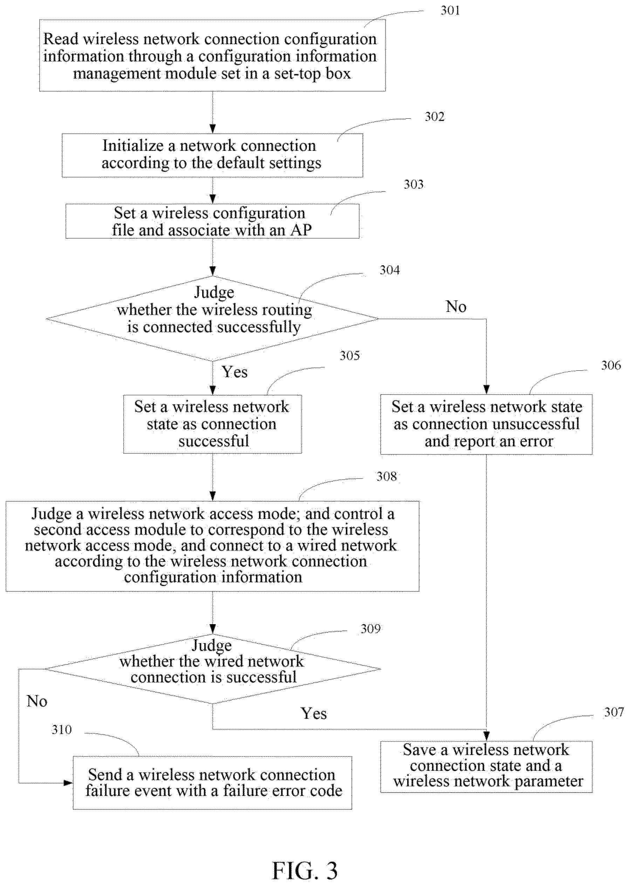

Take controlling the second access module to connect to the public network by means of the wireless network for example, and the following steps will be executed with reference to FIG. 3.

In step 301, it is to read wireless network connection configuration information through a configuration information management module set in the set-top box.

In step 302, it is to initialize a network connection according to the default settings.

Alternatively, the initialization may be accomplished by turning off corresponding processes. The corresponding processes include a DHCP (Dynamic Host Configuration Protocol) process and an ADSL (Point-to-Point Protocol Over Ethernet) dialing process.

In step 303, it is to set a wireless configuration file according to the network connection configuration information and associate with an AP (Wireless Access Point).

In step 304, it is to judge whether wireless routing is connected successfully by inquiring a wireless state file; if the wireless routing is connected successfully, proceed to the next step; and if the wireless routing is connected unsuccessfully, proceed to step 306.

In step 305, it is to set a wireless network state as connection successful, and proceed to step 308.

In step 306, it is to set a wireless network state as connection unsuccessful and report an error, and proceed to step 307.

In step 307, it is to save a wireless network connection state and a wireless network parameter.

In step 308, it is to judge a wireless network access mode; and control the second access module to correspond to the wireless network access mode, and connect to the wired network according to the wireless network connection configuration information.

If it is judged that the wireless network is connected in the LAN mode, it is to directly set an IP address, a gateway, a subnet mask and a DNS server according to the wireless network connection configuration information and control the second access module to connect to the wireless network;
if it is judged that the wireless network is connected in the DHCP mode, the DHCP process is started and the second access module is controlled to connect to the wireless network according to the wireless network connection configuration information;
if the wireless network is connected in the PPPOE mode, the PPPD process and the ADSL dialing process are started, and the second access module is controlled to connect to the wireless network according to the wireless network connection configuration information.

In step 309, it is to judge whether the wired network connection is successful; if the wired network connection is successful, proceed to step 307; and if the wired network connection is unsuccessful, proceed to step 310.

In step 310, it is to send a wireless network connection failure event with a failure error code.

In some other embodiments of the present invention, after the set-top box is turned on, before selecting the initial access network, it is to control the first access module to connect to the IPTV service network by means of the wireless network and control the second access module to connect to the public network by means of the wired network.

In order to truly achieve a seamless handover without affecting the user experience during the network handover, in a plurality of alternative embodiments, the step of executing the handover includes:
removing all addresses of the current default gateway;
setting a gateway of the second network as a default gateway.

Alternatively, when the first network is the IPTV service network connected by means of the wired network and the second network is the public network connected by means of the wireless network, all IPTV service network addresses of the current wired gateway are removed, and the wireless gateway is set as the default gateway.

When the first network is the public network connected by means of the wireless network and the second network is the IPTV service network connected by means of the wired network, all public network addresses of the current wireless gateway are removed, and the wired gateway is set as the default gateway.

When the first network is the IPTV service network connected by means of the wireless network and the second network is the public network connected by means of the wired network; or when the first network is the public network connected by means of the wired network, and the second network is the IPTV service network by means of the wireless network, the handover operation is executed according to the principle in the preceding two paragraphs.

In a plurality of embodiments, after executing the handover operation, it also detects whether to exit from the second network, and returns to the step of selecting the initial access network when detecting exiting from the second network.

If the second network is the public network and the first network is the IPTV service network, it is to detect whether the user exits from the public network environment and acquire an initial network selection parameter according to the user access behavior. If the user enters the public network environment, the public network is selected as the initial access network from the IPTV service network and the public network according to the initial network selection parameter, and the public network is accessed via the second access module. If the user enters the IPTV service network, the IPTV service network is selected as the initial access network from the IPTV service network and the public network according to the initial network selection parameter and the IPTV service network is accessed via the first access module.

If the second network is the IPTV service network and the first network is the public network, it is to detect whether the user exits from the IPTV service network environment and acquire an initial network selection parameter according to the user access behavior. If the user enters the public network environment, the public network is selected as the initial access network from the IPTV service network and the public network according to the initial network selection parameter, and the public network is accessed via the first access module. If the user enters the IPTV service network, the IPTV service network is selected as the initial access network from the IPTV service network and the public network according to the initial network selection parameter, the IPTV service network is accessed via the second access module.

In a plurality of alternative embodiments, the first network is one in the interactive personality television IPTV service network and the public network in order to make the set-top box have the largest possible network access range, and the first network is the other one in the interactive personality television IPTV service network and the public network.

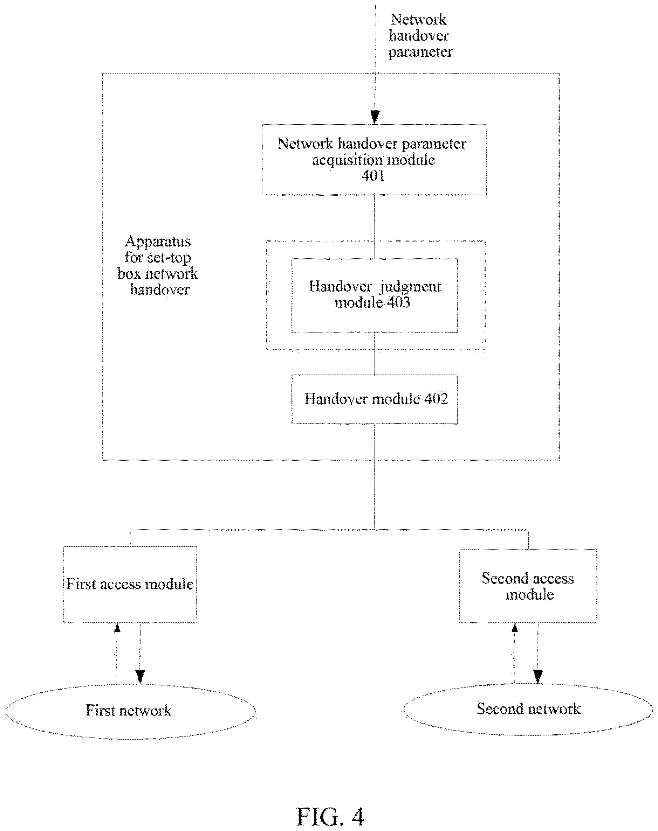

Alternatively, the embodiment of the present invention provides an apparatus for set-top box network handover, a structure is shown in FIG. 4 and the apparatus includes:
a network handover parameter acquisition module 401, arranged to: acquire at least one network handover parameter in a state that a set-top box is connected to a first network through a first access module which has been connected to the first network;
a handover module 402, arranged to: access a second network through a second access module that has been connected to the second network when it is determined that a handover operation is required to be executed according to the network handover parameter.

As one embodiment, the first network is an IPTV service network, and the second network is a public network:
the network handover parameter acquisition module 401 acquires the network handover parameter according to a behavior of the user accessing the IPTV service network or a behavior of the user accessing the public network in the state that the set-top box is connected to the IPTV service network through the first access module;
when it is judged that the handover operation is required to be executed according to the network handover parameter, the handover module 402 accesses the public network through the second access module which has been connected to the public network.

In a plurality of embodiments, the apparatus also includes a handover judgment module 403, arranged to: judge whether to execute a handover according to the network handover parameter.

When the first network refers to the IPTV service network and the second network refers to the public network, if the user accesses the IPTV service network, the handover judgment module judges that a handover is not performed according to the network handover parameter; and if the user accesses the public network, the handover judgment module judges that the handover is executed according to the network handover parameter;

As another embodiment, the first network is the public network and the second network is the IPTV service network:
the network handover parameter acquisition module 401 acquires the network handover parameter according to the behavior of the user accessing the IPTV service network or the behavior of the user accessing the public network in the state that the set-top box is connected to the public network through the first access module;
the handover module accesses the IPTV service network through the second access module that has been connected to the IPTV service network when judging that a handover operation is required to be executed according to the network handover parameter.

In a plurality of embodiments, still refer to FIG. 4, the apparatus also includes a handover judgment module 403, arranged to: judge whether to execute a handover based on the network handover parameter.

When the first network is the public network and the second network is the IPTV service network, if the user accesses the IPTV service network, the handover judgment module judges that a handover will be executed according to the network handover parameter; and if the user accesses the public network, the handover judgment module judges that a handover will not be executed according to the network handover parameter.

In an alternative embodiment, the handover module 402 includes:
a removing unit, arranged to: remove all addresses of the current default gateway;
a setting unit, arranged to: set the gateway of the second network as the default gateway after removing all the addresses of the current default gateway.

When the set-top box is connected to the IPTV service network through the first access module by means of the wired network and is connected to the public network through the second access module by means of the wireless network, the removing unit removes all the addresses of the current default gateway, and the setting unit sets the gateway of the wireless network as the default gateway.

When the set-top box is connected to the public network through the first access module in a wired mode and is connected to the IPTV service network through the second access module in a wireless mode, the principle is the same as that in the preceding paragraph.

When the set-top box is connected to one of the IPTV service network and the public network through the first access module in the wireless mode and is connected to the other of the IPTV service network and the public network through the second access module in the wired mode, the reason is the same as the preceding paragraph.

In some other embodiments of the present invention, the apparatus also includes an initial access module, arranged to: before the network handover parameter acquisition module acquires the network handover parameter, select an initial access network from the first network and the second network according to an initial network selection parameter, and access the initial access network via an access module corresponding to the initial access network.

The initial network selection parameter may be a preset parameter or a parameter acquired according to the user access behavior.

As an embodiment, the first network is the IPTV service network, and the second network is the public network. The initial access module selects the IPTV service network as the initial access network from the IPTV service network and the public network according to the preset initial network selection parameter before the network handover parameter acquisition module acquires the network handover parameter, and accesses the IPTV service network through the first access module.

As another embodiment, the first network is the IPTV service network and the second network is the public network. The initial access module selects the IPTV service network as the initial access network from the IPTV service network and the public network according to the behavior of the user accessing the IPTV service network before the network handover parameter acquisition module acquires the network handover parameter, and accesses the IPTV service network through the first access module.

In other embodiments, the initial access network may be the public network or the IPTV service network.

In some other embodiments of the present invention, the apparatus also includes a controlling module, arranged to: before the initial access module selects the initial access network, control the first access module and the second access module to connect respectively to the first network and the second network.

Take the first access module connecting to the IPTV service network by means of the wired network as an example, the controlling module includes:
a wired configuration information acquiring unit, arranged to: read wired network connection configuration information through a configuration information management module set in the set-top box.

A wired network initializing unit is arranged to: initialize a wired network connection according to the default settings.

Alternatively, the wired network initializing unit achieves the initialization by closing corresponding processes. The corresponding processes include a DHCP process and an ADSL dialing process.

A cable connection checking unit is arranged to: check a cable connection status.

A wired connection unit is arranged to: judge a wired network access mode; and control the first access module to correspond to the wired network access mode, and connect to the wired network according to the wired network connection configuration information.

If the wired connection unit judges that the first access module is connected to the wired network in the LAN mode, it is to directly set an IP address, a gateway, a subnet mask and a DNS server according to the wired network connection configuration information and control the first access module to connect to the wired network;
if the wired connection unit judges that the first access module is connected to the wired network in the DHCP mode, it is to start the DHCP process and control the first access module to connect to the wired network according to the wired network connection configuration information;
if the wired connection unit judges that the first access module is connected to the wired network in the PPPOE mode, it is to start the PPPD process and the ADSL dialing process, and control the first access module to connect the wired network according to the wired network connection configuration information.

A wired network connection detecting unit is arranged to: judge whether a wired network connection is successful.

A wired network storing unit is arranged to: save a wired network connection state and a wired network parameter when the network connection detecting unit judges that the wired network connection is successful, and notify other modules of the set-top box that the wired network connection is successful.

A wired network error reporting unit is arranged to: send a wired network connection failure event with a failure error code in a case that the network connection detecting unit judges that the wired network connection is unsuccessful.

Take the second access module connecting to the wireless network by means of the wireless network as an example, the controlling module includes:
a wireless configuration information acquiring unit, arranged to: read wireless network connection configuration information through a configuration information management module set in the set-top box.

A wireless network initializing unit is arranged to: initialize a network connection according to the default settings.

Alternatively, the wireless network initializing unit may implement the initialization by closing corresponding processes. The corresponding processes include a DHCP process and an ADSL dialing process.

An associating unit is arranged to: set a wireless configuration file according to the network connection configuration information and associate with an AP (Wireless Access Point).

A wireless routing checking unit is arranged to: judge whether wireless routing is connected successfully by inquiring a wireless state file.

A wireless state setting unit is arranged to: set a wireless network connection state.

A wireless connection unit is arranged to: judge a wireless network access mode; and control the second access module to correspond to the wireless network access mode, and connect to the wired network according to the wireless network connection configuration information.

If the wireless connection unit judges that the second module is connected to the wireless network in the LAN mode, it is to directly set an IP address, a gateway, a subnet mask and a DNS server according to the wireless network connection configuration information, and control the second access module to connect to the wireless network;
if the wireless connection unit judges that the second module is connected to the wireless network in the DHCP mode, then it is to start the DHCP process and control the second access module to connect to the wireless network according to the wireless network connection configuration information;
if the wireless connection unit judges that the second module is connected to the wireless network in the PPPOE mode, it is to start the PPPD process and the ADSL dialing process, and control the second access module to connect to the wireless network according to the wireless network connection configuration information.

A wireless network connection detecting unit is arranged to: judge whether a wired network connection is successful.

A wireless error reporting unit is arranged to: send a wireless network connection failure event with a failure error code.

A wireless state storing unit is arranged to: save a wireless network connection state and a wireless network parameter.

In a plurality of embodiments, the apparatus provided in the embodiment of the present invention also includes an exiting detection module, arranged to: detect whether to exit from the second network after the handover module is connected to the second network through the second access module.

If the second network is the public network and the first network is the IPTV service network, the exiting detection module detects whether the user exits from the public network environment and acquires an initial network selection parameter according to the user access behavior. If the user enters the public network environment, the exiting detection module selects the public network as the initial access network from the IPTV service network and the public network according to the initial network selection parameter, and accesses the public network through the second access module. If the user enters the IPTV service network, the exiting detection module selects the IPTV service network as the initial access network from the IPTV service network and the public network according to the initial network selection parameter, and accesses the IPTV service network through the first access module.

If the second network is the IPTV service network and the first network is the public network, the exiting detection module detects whether the user exits from the IPTV service network environment and acquires an initial network selection parameter according to the user access behavior. If the user enters the public network environment, the exiting detection module selects the public network as the initial access network from the IPTV service network and the public network according to the initial network selection parameter, and accesses the public network through the first access module. If the user enters the IPTV service network, the exiting detection module selects the IPTV service network as the initial access network from the IPTV service network and the public network according to the initial network selection parameter, and accesses the IPTV service network through the second access module.

In a plurality of embodiments, the exiting module detects whether to exit from the second network after the handover module is connected to the second network through the second access module in accordance with a predetermined time interval.

In a plurality of alternative embodiments, the first network is one of the interactive personality television IPTV service network and the public network in order to make the set-top box have the largest possible network access range, and the first network is the other one of the interactive personality television IPTV service network and the public network.

From the above description, it can be seen that through the method for set-top box network handover provided in the embodiments of the present invention, the user can perform handover between different network environments by using the set-top box, thereby enabling the user to enter a network environment besides the IPTV service network, reducing the network access limitations of the set-top box in the related art, and broadening the scope of network access. Meanwhile, through the method for set-top box network handover provided in the embodiment of the present invention, it may detect whether the user exits from the current network environment according to the user access behavior and perform the handover operation when judging that the handover is needed, thus realizing a seamless handover between different networks. In the embodiment of the present invention, one of the IPTV service network and the public network is used as the first network and the other one of the IPTV service network and the public network is used as the second network, so that the user can not only enjoy services of the IPTV service network but also freely browse network videos in the public network and execute operations such as online downloading and APPs (applications) upgrading.

Alternatively, the embodiment of the present invention also provides a set-top box, which includes a first access module used for accessing a first network and a second access module used for accessing a second network; and also includes the apparatus for set-top box network handover provided in any one of the embodiments of the present invention.

It should be understood that a plurality of embodiments described in the specifications are used for illustrating and explaining the present invention only and are not used to limit the present invention. In the case of no conflicts, the embodiments and features in the embodiments of the present application may be combined with each other.

It is apparent that those people skilled in the art can make various changes and modifications of the present invention without departing from the spirit and scope of the present invention. Thus, if such modifications and changes of the present invention belong to the scope of the appended claims of the present invention and their equivalents, the present invention is intended to comprise these modifications and changes.

### Industrial Applicability

Through the method for set-top box network handover provided in the embodiments of the present invention, a user can use the set-top box to access a network besides the IPTV service network, thus reducing the network access limitation of the set-top box in the related art and broadening the range of network access. At the same time, through the method for set-top box network handover provided in the embodiment of the invention, the user can perform seamless handover between different networks by using the set-top box, and can freely browse network videos and perform operations such as on-line downloading and APP (application) upgrading. Therefore, the present invention has very strong industrial applicability.

## Claims

1. A method for set-top box network handover, comprising steps:
acquiring a network handover parameter in a state that a set-top box is connected to a first network through a first access module which has been connected to the first network;
executing a handover operation of accessing a second network through a second access module which has been connected to the second network when determining that the handover operation is required to be executed according to the network handover parameter.

2. The method for set-top box network handover of claim 1, wherein, the step of executing the handover comprises:
removing all addresses of a current default gateway;
setting a gateway of the second network as a default gateway.

3. The method for set-top box network handover of claim 1, further comprising:
before acquiring the network handover parameter, selecting an initial access network from the first network and the second network according to an initial network selection parameter, and accessing the initial access network via an access module corresponding to the initial access network.

4. The method for set-top box network handover of claim 3, further comprising:
before the step of selecting the initial access network, controlling the first access module and the second access module to connect respectively to the first network and the second network.

5. The method of claim 3, further comprising:
after the step of executing the handover operation, detecting whether to exit from the second network, and returning to the step of selecting the initial access network when detecting exiting from the second network.

6. The method for set-top box network handover of any one of claims 1 to 5, wherein:
the first network is an interactive personality television, IPTV, service network or a public network, and the second network is a network different from the first network in the interactive personality television, IPTV, service network and the public network.

7. An apparatus for set-top box network handover, comprising a network handover parameter acquisition module and a handover module, wherein:
the network handover parameter acquisition module is arranged to: acquire a network handover parameter in a state that a set-top box is connected to a first network via a first access module which has been connected to the first network;
the handover module is arranged to: access a second network through a second access module which has been connected to the second network when determining that a handover operation is required to be executed according to the network handover parameter.

8. The apparatus for set-top box network handover of claim 7, wherein, the handover module comprises a removing unit and a setting unit, wherein:
the removing unit is arranged to: remove all addresses of a current default gateway;
the setting unit is arranged to: set a gateway of the second network as a default gateway.

9. The apparatus for set-top box network handover of claim 7, further comprising an initial access module, wherein:
the initial access module is arranged to: before the network handover parameter acquisition module acquires the network handover parameter, select an initial access network from the first network and the second network according to an initial network selection parameter, and access the initial access network via an access module corresponding to the initial access network.

10. The apparatus for set-top box network handover of claim 9, further comprising a controlling module, wherein:
the controlling module is arranged to: before the initial access module selects the initial access network, control the first access module and the second access module to connect respectively to the first network and the second network.

11. The apparatus for set-top box network handover of claim 9, further comprising an exiting detection module, wherein:
the exiting detection module is arranged to: detect whether to exit from the second network after the handover module is connected to the second network via the second access module.

12. The apparatus for set-top box network handover of any one of claims 7 to 11, wherein:
the first network is an interactive personality television, IPTV, service network or a public network; and the second network is a network different from the first network in the interactive personality television, IPTV, service network or the public network.

13. A set-top box, comprising a first access module used for accessing a first network and a second access module used for accessing a second network; and
further comprising the apparatus for set-top box network handover of any one of claims 7 to 12.

14. A computer program, comprising program instructions, wherein, when the program instructions are executed by an apparatus for set-top box network handover, the apparatus for set-top box network handover executes the method for set-top box network handover of any one of claims 1 to 6.

15. A carrier, for carrying the computer program of claim 14.
